# EUROPEAN PATENT APPLICATION

(11) **EP 2 077 674 A1**
(43) Date of publication of application: **08.07.2009**
(21) Application number: 06822533.3
(22) Date of filing: 27.10.2006
(51) Int. Cl.: H04Q 7/22, H04Q 7/38

(54) **HANDOVER METHOD AND BASE STATION**

(71) Applicant: Fujitsu Limited, Kawasaki-shi, Kanagawa 211-8588 (JP)
(72) Inventor: OHTA, Yoshiaki, Kawasaki-shi Kanagawa 211-8588 (JP); TAJIMA, Yoshiharu, Kawasaki-shi Kanagawa 211-8588 (JP); TANAKA, Yoshinori, Kawasaki-shi Kanagawa 211-8588 (JP); KAWASAKI, Yoshihiro, Kawasaki-shi Kanagawa 211-8588 (JP); SUGIYAMA, Katsumasa, Kawasaki-shi Kanagawa 211-8588 (JP); HAYASHI, Ritsuo, Kawasaki-shi Kanagawa 211-8588 (JP); OBUCHI, Kazuhisa, Kawasaki-shi Kanagawa 211-8588 (JP)
(74) Representative: Stebbing, Timothy Charles
(86) International application number: PCT/JP2006/321572
(87) International publication number: WO 2008/053511

(57) **Abstract**

To provide a method for suitably enabling the resources of a handover-source base station to be released and the post-handover processes of a handover-destination base station to be executed by securely determining a transfer of Last Packet without increasing a packet transmission delay in a handover process in a mobile communication system where a mobile station makes a communication with packets, a base station is provided with a Last Packet determination timer, and the handover source base station or the handover-destination base station activates the timer upon receipt of a handover completion acknowledgment transmitted from an upper node station or according to a resource release instruction after the reception of the handover completion acknowledgment, and determines that Last Packet has been received, upon expiration of the timer.

## Description

### Technical Field

The present invention relates to a handover method, and a base station related to the handover method in a mobile communication system where a mobile terminal makes a communication with packets.

### Background Art

As mobile communication systems such as a cellular phone, etc., third-generation CDMA systems have started services. 3GPP (3rd Generation Partnership Project) is currently conducting a study of a next-generation mobile communication system (LTE: Long Term Evolution) that enables a higher-speed communication. A significant challenge for the next-generation system is to reduce a transmission delay in addition to an increase in a transmission rate. The next-generation mobile communication system currently under study in 3GPP is hereinafter referred to as LTE.

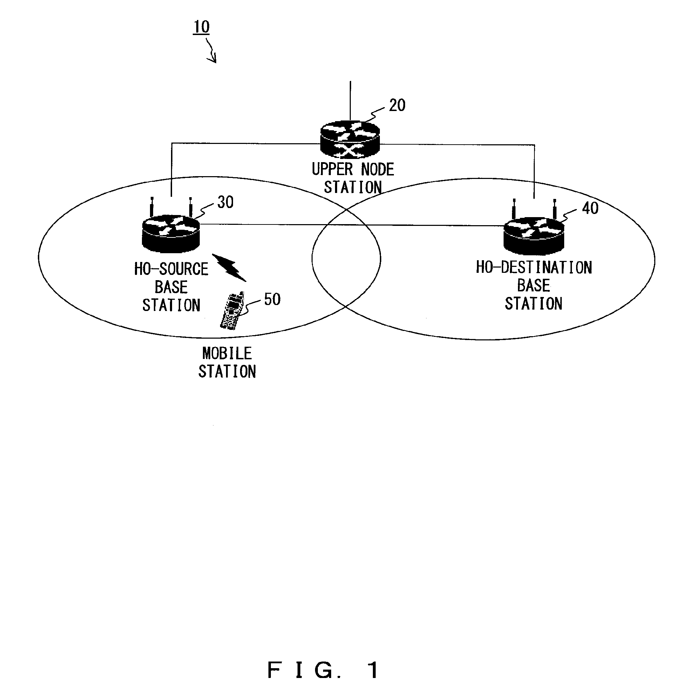

Fig. 1 is an example configuration of a mobile communication system 10, and illustrates an upper node station 20, and a handover-source base station 30 and a handover-destination base station 40 of a mobile station 50.

In a mobile communication, switching (handover) of base stations with which a mobile station makes a communication occurs when the mobile station moves during the communication. Since LTE is based on a packet switching system, a handover is implemented as a hard handover. In the hard handover, a channel between the mobile station 50 and the handover-destination base station 40 is connected after a channel connection with the handover-source base station 30, with which the mobile station 50 makes a communication before moving, is disconnected. The hard handover can be made in a short time, for example, by obtaining the system information of the handover-destination base station 40 immediately before the handover is made. However, a transmission suspension state of user data occurs during the handover.

Accordingly, in order to reduce a transmission delay, it is essential to shorten the transmission suspension state and to prevent packets from being lost during the transmission suspension. If packets are lost during the transmission suspension, they are recovered by being retransmitted end-to-end, leading to a transmission delay.

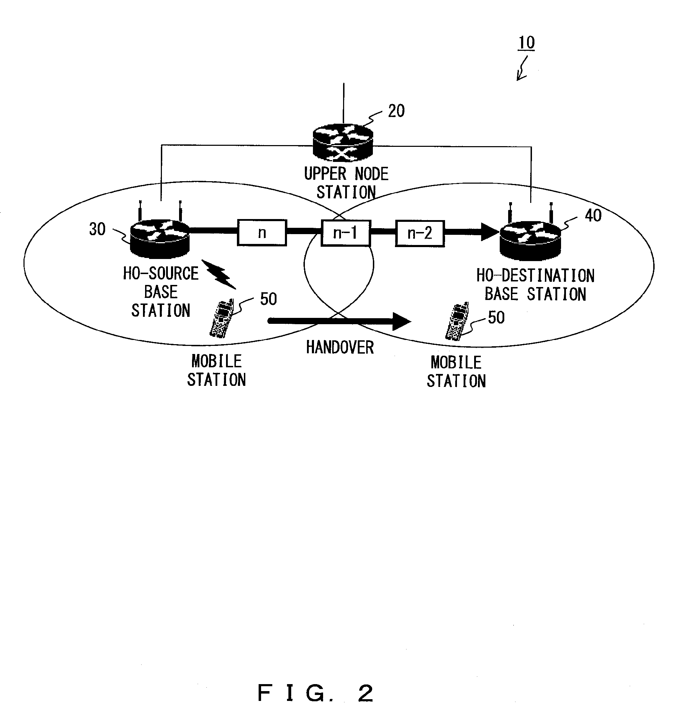

Fig. 2 illustrates a method for transferring packets, which remain in the handover-source base station 30, from the handover-source base station 30 to the handover-destination base station 40 as one typical method for preventing packets from being lost during a handover. In Fig. 2, a visited area of the mobile station 50 changes from the area of the handover-source base station 30 to that of the handover-destination base station 40. Packets n-2 to n addressed to the mobile station 50 are stored in the handover-source base station 30 prior to the handover, then a handover occurs, accordingly, the packets n-2 to n are transferred to the handover-destination base station 40 via the channel connecting the handover-source base station 30 and the handover-destination base station 40. If there is no channel that directly connects the handover-source base station 30 and the handover-destination base station 40, a channel connecting the upper node station 20 and the handover-source base station 30, and a channel connecting the upper node station 20 and the handover-destination base station 40 are available alternatively.

Such a method for transferring remaining packets is formulated, for example, by IETF (Internet Engineering Task Force) as the specifications of Fast Handovers for Mobile IPv6 (see the following Non-Patent Document 1) . Moreover, a similar method is formulated as specifications also for LTE as described in the following Non-Patent Document 2. With this method, a high-speed handover can be made without retransmitting packets end to end because the packets do not become discontinuous immediately after the handover. This patent specification discloses the invention by exemplifying a handover in LTE.

Fig. 3 illustrates a handover sequence in LTE described in Non-Patent Document 2. UE, BS1, BS2, and GW respectively correspond to the mobile station 50, the handover-source base station 30, the handover-destination base station 40, and the upper node station 20 of the handover-source base station 30 and the handover-destination base station 40. Procedures for the handover executed in this system are as follows. Their details are described in Section 9.4.2 of Non-Patent Document 2.
1. The visited area restrictions of the mobile station 50
2. The handover-source base station 30 controls a measurement report of the mobility of the mobile station 50, whereas the mobile station 50 reports the measurement results to the handover-source base station 30 according to the control.
3. The handover-source base station 30 decides a handover destination.
4. The handover-source base station 50 transmits a handover request to a destination candidate base station.
5. The destination candidate base station performs a call admission control, and serves as the handover-destination base station 40 if it permits a call admission.
6. The handover-destination base station 40 returns a handover request response.
7. The handover-source base station 30 issues a handover instruction to the mobile station 50.
8. The mobile station 50 and the handover-destination base station 40 execute various types of synchronization processes of Layer 1 (physical layer) and Layer 2 (data link layer), such as radio synchronization, and the like.
9. Upon completion of the synchronization, the mobile station 50 reports a handover completion to the handover-destination base station 40.
10. The handover-destination base station 40 reports the handover completion of the mobile station 50 to the upper node station 20.
11. The upper node station 20 returns a handover completion acknowledgment to the handover-destination base station 40 after switching the route to the handover-destination base station 40.
12. The handover-destination base station 40 issues an instruction to release resources such as a memory region, etc. to the handover-source base station 30.
13. The handover-source base station 30 releases resources.
14. The visited area of the mobile station 50 is updated.

The visited area restriction 1 of the mobile station 50 are the state before the handover starts, and the upper node station 20 grasps the visited area of the mobile station 50. Naturally, a plurality of mobile stations 50 can exist, and one of them is cited and described as an example here. The above described "visited area restrictions" are referred to as "Provision of area restrictions" in the Non-Patent Document 2.

The handover is started in the measurement control 2, by using as a trigger a report of measurement results of the current radio quality, which is made from the mobile station 50 to the base station 30. The mobile station 50 measures not only the radio quality of radio waves received from the base station 30 (handover-source base station) that the mobile station 50 is visiting but also the radio quality of radio waves from an adjacent base station. The handover-source base station 30 that receives the measurement results 3 of the radio quality decides a handover-destination base station 40 on the basis of the measurement results 3, and transmits the handover request 4 to the handover-destination base station 40. At that time, also information (mobile station ID, QoS information, and the like) about the mobile station 50 are transmitted.

The handover-destination base station 40 performs a call admission control 5 on the basis of the information. When the handover-destination base station 40 permits a call admission of the mobile station 50, it returns the handover response 6 to the handover-source base station 30.

Then, the handover-source base station 30 issues the handover instruction 7 to the mobile station 50, and starts to transfer packets to the handover-destination base station 40 at around the timing of issuing the instruction.

The mobile station 50 that receives the handover instruction establishes synchronization 8 with the handover-destination base station 40, and transmits the handover completion report 9 to the handover-destination base station 40 after establishing the synchronization. Next, the handover-destination base station 40 transmits the handover completion report 10 to the upper node station 20.

Upon receipt of this report, the upper node station 20 switches the transmission route of packets addressed to the mobile station 50 from the handover-source base station 30 to the handover-destination base station 40. Then, the upper node station 20 returns the handover completion acknowledgement 11 to the handover-destination base station 40.

The handover-destination base station 40 that receives the handover completion acknowledgement issues the resource release instruction 12 to the source base station 30, and the handover-source base station 30 releases resources in 13. The "resource release instruction" 12 issued to the handover-source base station 30 is referred to as "Release Resource" in Non-Patent Document 2. However, this instruction is referred to as a "resource release instruction" or a "resource release message" in this patent specification and drawings hereof.

Lastly, in 14, the status is returned to the visited area restrictions of the mobile station 50 of 1 after the handover by updating the visited area of the mobile station 50.

In LTE, packets are transferred from the handover-source base station 30 to the handover-destination base station 40 as described above. The method by which the last packet to be transferred is marked at the time of the packet transfer in order to explicitly detect the termination of the packet transfer and the handover-destination base station 40 determines the termination of the packet transfer upon receipt of the marked packet is proposed (see the following Non-Patent Document 3).

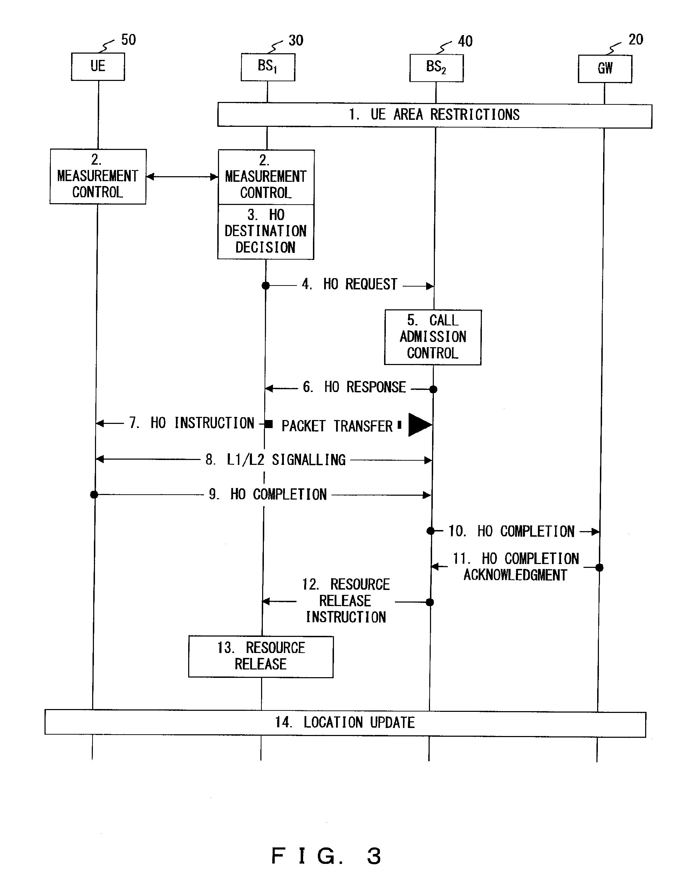

Upon termination of the packet transfer, the handover-destination base station 40 executes post-processes (the release of an interface band where the transfer occurs, and reordering to be described later if necessary). Hereinafter, the marked packet is referred to as "Last Packet". In Fig. 3, the packet transfer is made simultaneously with the issuance of the handover instruction. However, specific packet transfer timing depends on an implementation, and is not formulated as specifications.

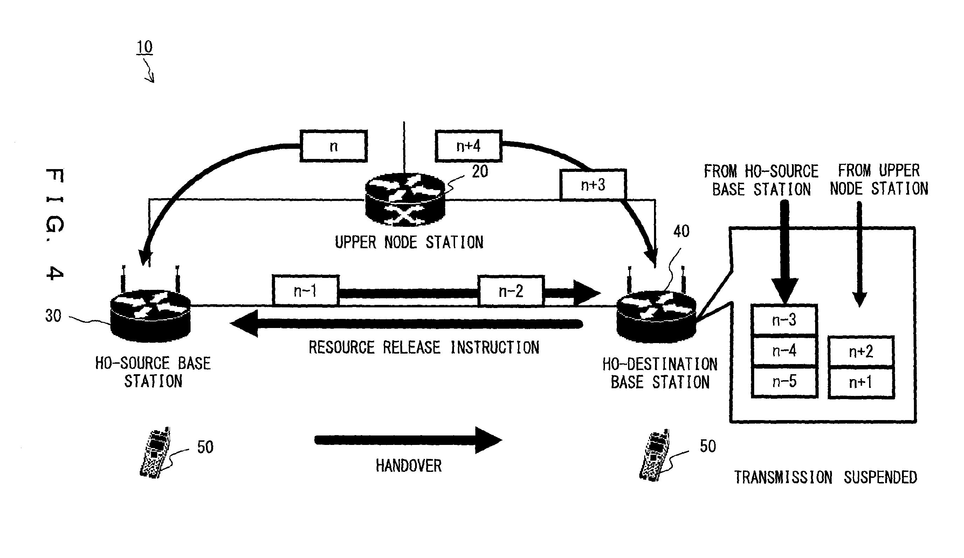

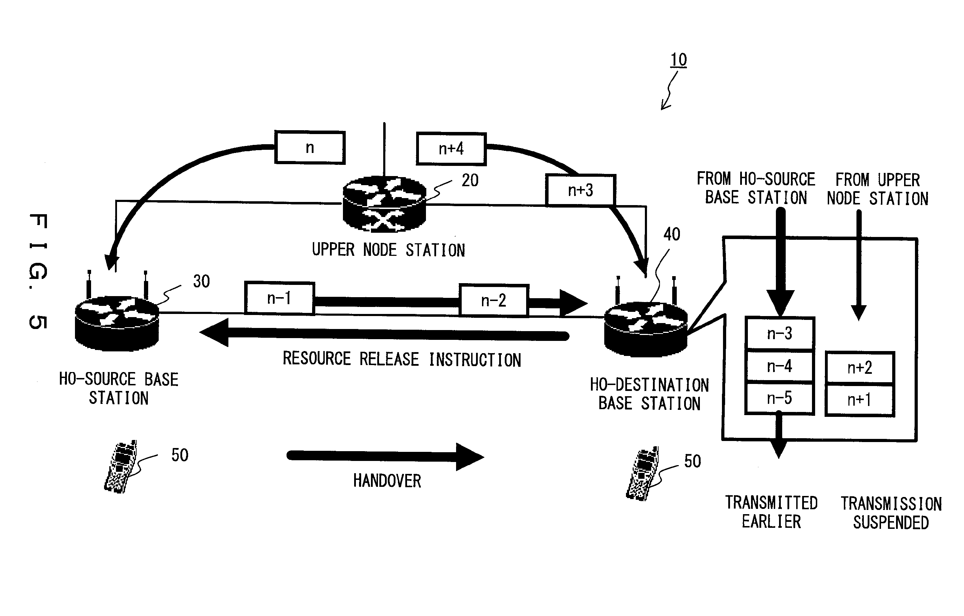

Figs. 4 and 5 illustrate the above described reordering method. Reordering is a function to rearrange packets that flow from the upper node station 20 and are addressed to the mobile station 50, and packets that are transferred from the handover-source base station 30 and are addressed to the mobile station 50 in order of sequence numbers, and to deliver the packets to the mobile station 50 by the handover-destination base station 40.

Fig. 4 illustrates the reordering method executed after all of the packets that flow from the upper node station 20 and are addressed to the mobile station 50 and the packets that are transferred from the handover-source base station 30 and are addressed to the mobile station 50 are received. Accordingly, reordering cannot be made before Last Packet is received, and the transmission of all of the packets is suspended.

In the example illustrated in Fig. 4, the mobile station 50 is performing a handover for moving from the area of the handover-source base station 30 to that of the handover-destination base station 40, and packets n-5 to n-3 transferred from the handover-source base station 30, and packets n+1 to n+2 flowing from the upper node station 20 remain in a transmission suspension state in the handover-destination base station 40. Packets n-2 to n-1 are being transferred from the handover-source base station 30 to the handover-destination base station 40, a packet n is being transferred from the upper node station 20 to the handover-source base station 30, and packets n+3 to n+4 are being transferred from the upper node station 20 to the handover-destination base station 40. Moreover, the resource release instruction is issued from the handover-destination base station 40 to the handover-source base station 30.

In the meantime, Fig. 5 illustrates a method for transmitting transferred packets to the mobile station 50 earlier. The packets n-5 to n-3 transferred from the handover-source base station 30 are transmitted to the mobile station 50 earlier. Accordingly, their sequence numbers can remain consistent. With this method, however, packets transmitted from the upper node station are suspended from being transmitted until Last Packet is received.

Additionally, in Fig. 5, if transferred packets arrive at the handover-destination base station intermittently, they are stored in the handover-destination base station intermittently. Accordingly, there is also a method for transmitting packets flowing from the upper node station to the mobile station 50 unless packets are transferred, and for preferentially transmitting packets to the mobile station 50 if the packets start to be transferred. With this method, it is not always necessary to identify Last Packet. By identifying Last Packet, however, the termination of the priority control can be detected quickly, and a communication band and a memory region can be released at high speed. With any of the above described methods, the reception of Last Packet is determined to perform reordering that is one of the post-processes as described above. Moreover, the reception of Last Packet is determined to optimally manage the resources (communication band and memory capacity) of a base station.

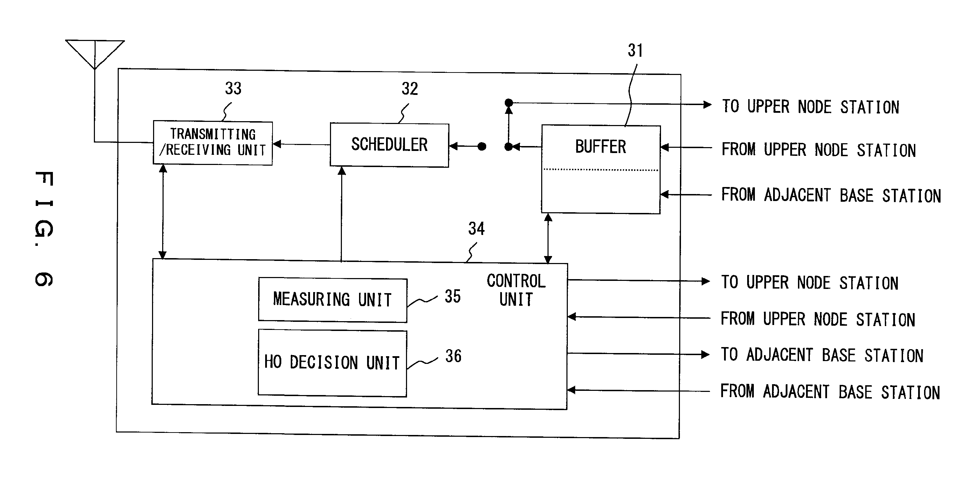

Fig. 6 is an example device configuration of a base station, which is intended to execute such a handover method.

A buffer unit 31 includes a memory for storing data flowing from the upper node station, and a memory for storing packets transferred from an adjacent base station (handover-source base station). In this figure, two buffers are physically provided. However, also a device configuration where one memory is physically provided, and partitioned and used in a software manner can be adopted.

A scheduler unit 32 selects a mobile station to which a wireless transmission is made, extracts data that is stored in the buffer unit 31 and addressed to the corresponding user, and transfers the extracted data to a transmitting/receiving unit 33.

The transmitting/receiving unit 33 encodes/modulates the data transferred from the scheduler unit 32 and wirelessly transmits the data to the mobile station via an antenna, or receives a signal transmitted from the mobile station.

A control unit 34 controls a measuring unit 35, a handover decision unit 36, and the entire base station device.

The measuring unit 35 collects various types of measurement information transmitted from the mobile station. The measuring unit 35 collects, for example, a radio quality (CQI: Channel Quality Information), etc. of the mobile station.

The handover decision unit 36 decides whether or not to make a handover.

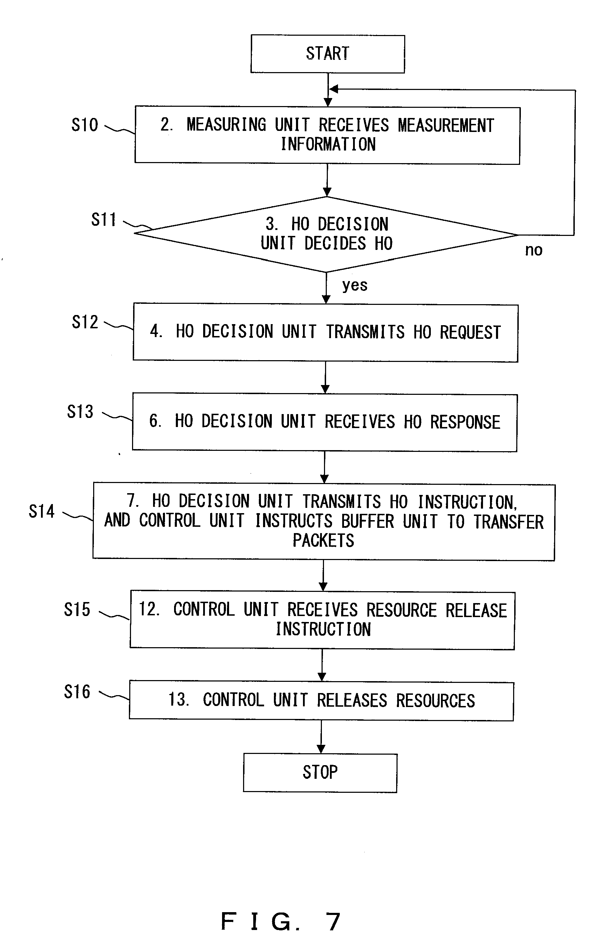

Fig. 7 is an example flowchart of handover operations performed in the case where the base station device illustrated in Fig. 6 is a handover-source base station. Numbers within the flowchart correspond to those in the aforementioned sequence illustrated in Fig. 3.

In step S10, the measuring unit 35 receives measurement information from the mobile station 50 that is visiting the area of the local base station. Next, in step S11, the handover decision unit 36 decides whether or not to make a handover. If the handover decision unit 36 decides to make a handover, the process goes to step S12. Otherwise, the process goes back to step S10, in which measurement information from the next mobile station 50 is received.

In step S12, the handover decision unit 36 transmits the handover request to a handover-destination candidate base station 40. Upon receipt of the handover response from the handover-destination candidate base station 40 in step S13, the handover decision unit 36 transmits the handover instruction to the mobile station 50, and the control unit 34 instructs the buffer unit 31 to transfer packets to the handover-destination base station 40 in step S14. As stated earlier, the timing of instructing the packet transfer is not limited to this one.

The control unit 34 waits for the resource release instruction from the handover-destination base station 40. Upon receipt of the resource release instruction in step S15, the control unit 34 releases the resources allocated to the mobile station that makes the handover in step S16. Here, the process is terminated.

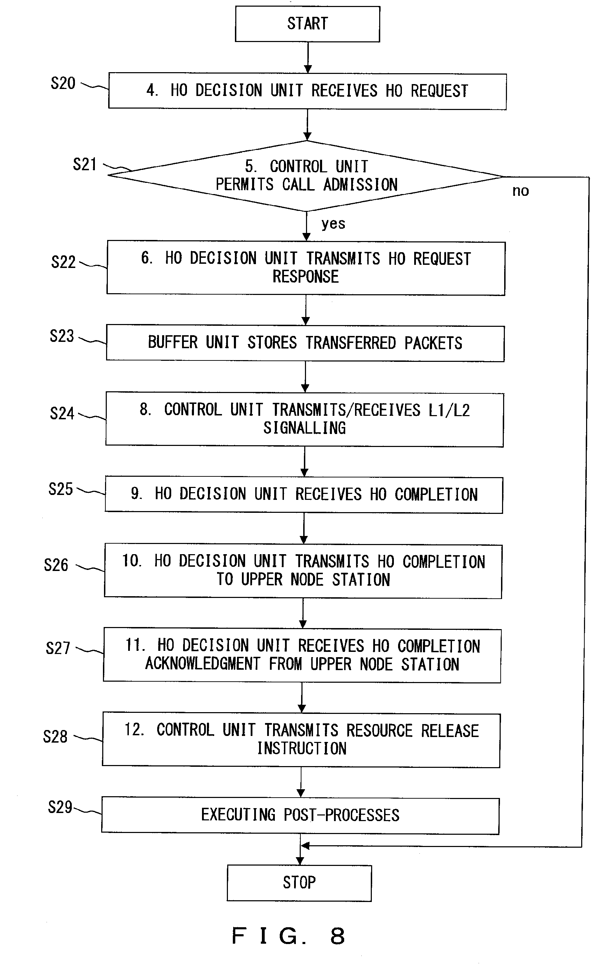

Fig. 8 is an example flowchart of handover operations performed in the case where the base station device illustrated in Fig. 6 is a handover-destination base station. Numbers within the flowchart correspond to those in the aforementioned sequence illustrated in Fig. 3.

In step S20, the handover decision unit 36 receives the handover request. Next, in step S21, the control unit 34 determines whether or not to permit a call admission. If the call admission is permitted, the process goes to step S22. If the call admission is not permitted, the process is terminated.

In step S22, the handover decision unit 36 transmits the handover request response to the handover-source base station 30. Next, in step S23, the buffer unit 31 stores packets transferred from the handover-source base station 30. In step S24, the control unit 34 transmits/receives L1/L2 signalling for establishing synchronization to/from the mobile station 50.

Next, when the handover decision unit 36 receives the handover completion report from the mobile station 50 in step S25, the process goes to step S26, in which the handover decision unit 36 transmits the handover completion report of the mobile station 50 to the upper node station 20.

When the handover decision unit 36 receives the handover completion acknowledgment from the upper node station 20 in step S27, the process goes to step S28, in which the control unit 34 issues the resource release instruction to the handover-source base station 30, and executes the post-processes in step S29. Here, the process is terminated.

The handover technique in LTE is currently under study as described above. In the present situation, however, a method for securely detecting Last Packet in the handover-source base station 30 or the handover-destination base station 40 is not stipulated. This is because the handover-source base station 30 cannot identify which of packets flowing from the upper node station 20 is to be Last Packet. However, to prevent packets from being lost, resources must be released after Last Packet is securely detected in the handover-source base station 30 or the handover-destination base station 40.

The timing of releasing resources and its problems are described below.

A case (Case 1) where the handover-destination base station 40 transmits the resource release instruction without waiting for the reception of Last Packet is initially described.

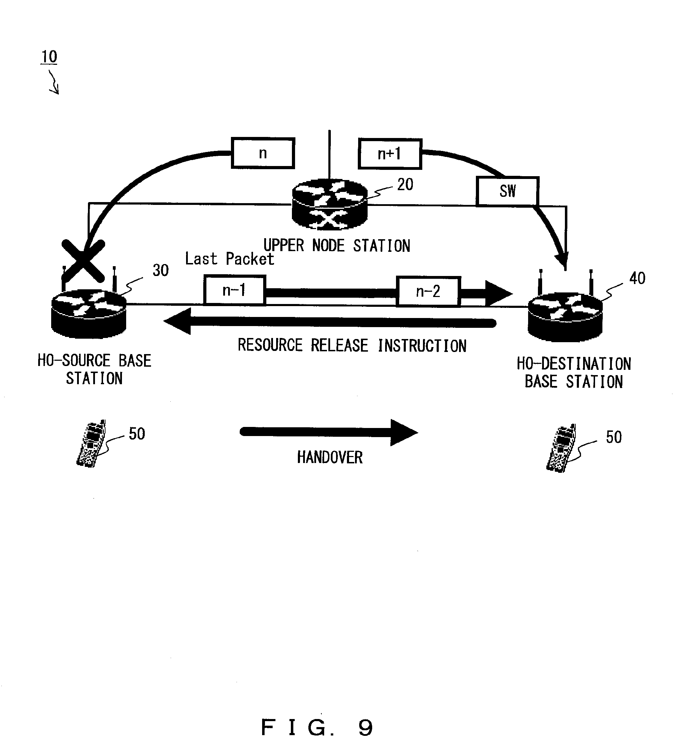

Fig. 9 explains a situation that can occur in Case 1. In the example illustrated in Fig. 9, the mobile station 50 is making a handover for moving from the area of the handover-source base station 30 to that of the handover-destination base station 40, the upper node station 20 switches the transmission route of packets addressed to the mobile station 50 after transmitting up to the packet n to the handover-source base station 30, and transmits packets n+1 and subsequent ones to the handover-destination base station 40.

In Case 1, the handover-destination base station 40 transmits the resource release instruction 12 immediately after receiving the handover completion acknowledgment 11 from the upper node station 20 with a packet SW. The packet SW is a packet of a control plane, and intended to notify the handover completion acknowledgment indicating that the transmission destination of packets (packets of a user plane) addressed to the mobile station 50 making a handover is switched from the handover-source base station 30 to the destination base station.

In the example illustrated in this figure, the handover-source base station 30 receives the resource release instruction before receiving the packet n, and may possibly release resources allocated to the corresponding mobile station 50. Accordingly, since the handover-source base station 30 releases the resources without receiving the packet n, it cannot transfer all of the packets. The packet n must be recognized as Last Packet originally. However, the packet n-1 is erroneously recognized as Last Packet because the timing of receiving the resource release instruction is too early.

Similarly, the handover-destination base station 40 executes the post-processes without receiving the packet n. For example, if reordering is made and packets start to be transmitted without receiving the packet n, the mobile station 50 detects that the packet n is lost, and it is therefore retransmitted end to end.

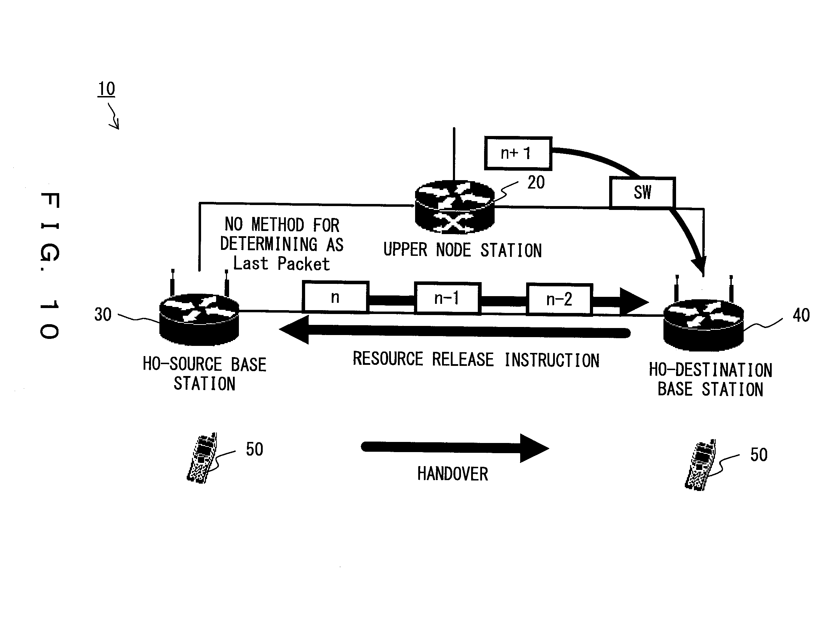

Fig. 10 explains an occurrence of another situation in Case 1.

The handover-source base station 30 can transfer the packet n, but cannot determine the packet n as Last Packet because more packets may possibly flow from the upper node station 20. The handover-destination base station 40 cannot execute the post-handover processes because it cannot detect the reception of Last Packet. For example, the reordering illustrated in Figs. 4 and 5 cannot be made.

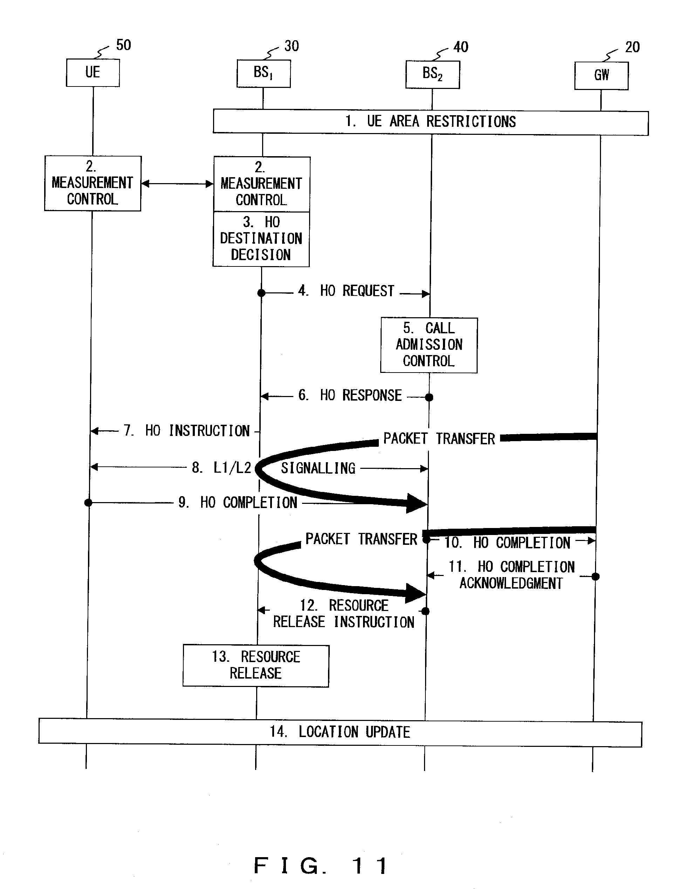

Fig. 11 illustrates the sequence of Case 1. In this figure, the handover-destination base station 40 issues the resource release instruction 12 to the handover-source base station 30 immediately after receiving the handover completion acknowledgment 11 from the upper node station 20 in the sequence illustrated in Fig. 3. In this case, the handover-source base station 30 starts to transfer packets after receiving the handover response 6 from the handover-destination base station 40. However, once the situation illustrated in Fig. 9 occurs, packets received after the handover-source base station 30 releases resources cannot be transferred to the handover-destination base station 40. Moreover, if the situation illustrated in Fig. 10 occurs, the handover-source base station 30 and the handover-destination base station 40 cannot determine whether or not Last Packet has been be received.

A case (Case 2) where the handover-destination base station 40 transmits the resource release instruction after waiting for the reception of Last Packet is described next. In this case, the handover-destination base station 40 transmits the resource release instruction 12 after waiting for the reception of Last Packet.

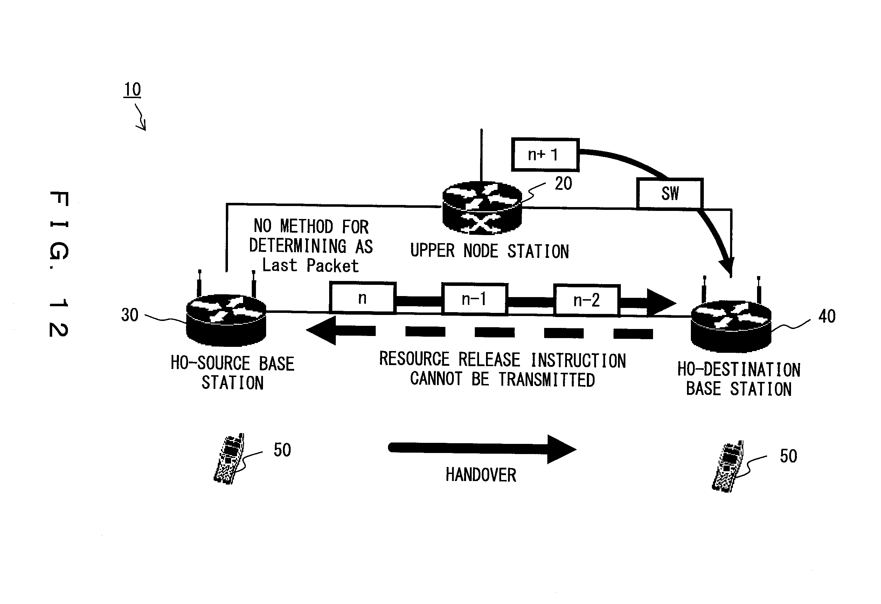

Fig. 12 illustrates the outline of Case 2. The upper node station 20 switches the transmission route of packets addressed to the mobile station 50 after transmitting up to the packet n to the handover-source base station 30, and transmits the packet n+1 and subsequent ones to the handover-destination base station 40. The packets n-2 to n are being transferred from the handover-source base station 30 to the handover-destination base station 40.

In this case, if the handover-source base station 30 can mark the packet n as Last Packet, the handover-destination base station 40 can detect Last Packet and transmit the resource release instruction. However, a method for determining the packet n as Last Packet in the handover-source base station 30 is not stipulated. If the packet n cannot be determined as Last Packet, the handover-source base station 30 cannot release resources. Moreover, the handover-destination base station 40 cannot execute the post-processes. For example, the reordering illustrated in Figs. 4 and 5 cannot be made.

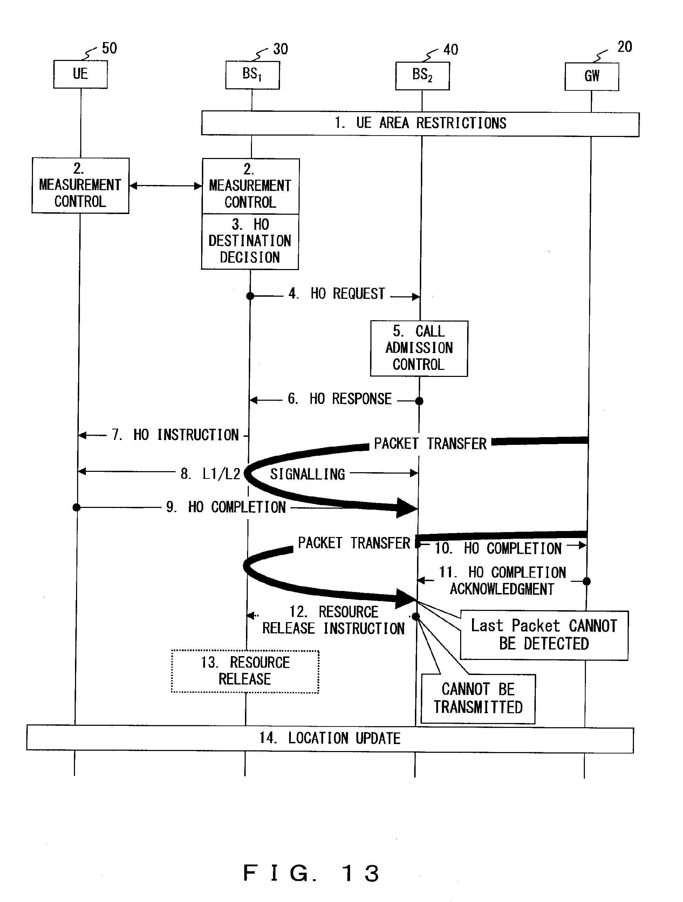

Fig. 13 illustrates the sequence of Case 2. The sequence illustrated in this figure is identical to that illustrated in Fig. 3 until the destination base station 40 receives the handover completion acknowledgment 11 from the upper node station 20. However, since Last Packet cannot be detected in the sequence illustrated in Fig. 13, the destination base station 40 cannot transmit the resource release instruction 12. Accordingly, the resource release 13 also cannot be properly made.

To properly release resources, a couple of techniques are proposed in the following Non-Patent Document 3.

One of them is a method by which the handover-destination base station 40 issues the resource release instruction to the handover-source base station 30 immediately after the handover completion report 9 is transmitted from the mobile station 50, and the handover-source base station 30 starts timer monitoring and releases resources upon timeout. However, since the timer is activated before the handover completion acknowledgment is transmitted from the upper node station 20, the length of monitoring time is forced to be increased if it is estimated on the safe side, leading to a longer transmission delay.

Another method proposes that the resource release instruction is issued after the handover completion acknowledgment is made from the upper node station 20. This is similar to the sequence illustrated in Fig. 3, and Last Packet cannot be accurately detected as stated earlier.

The further method proposes that the upper node station 20 transmits data marked with a data end to the handover-source base station 30 on the basis of the handover completion report 10 made from the handover-destination base station 40, the handover-source base station 30 transfers the data to the handover-destination base station 40, which then issues the resource release instruction upon receipt of the data marked with the data end.

With this method, however, a new data transfer sequence is added to the handover process. Therefore, it is not preferable.
Non-Patent Document 1: IETF, "Fast Handovers for Mobile IPv6," RFC4068, July 2005. (1161923962664_0.txt)
Non-Patent Document 2: 3GPP, "Radio Access Architecture and Interfaces," TR R3.018. Release 7, V0.4.0, March 2006.
Non-Patent Document 3: Samsung, "Method to release resources at source ENB during handover," R3-061032, 3GPP TSG-RAN WG3 #53 meeting, September 2006.

### Disclosure of Invention

An object of the present invention is to provide a method for suitably enabling the resources of a handover-source base station to be released and the post-handover processes of a handover-destination base station to be executed by securely determining a Last Packet transfer in order for a handover process of a mobile communication system where a mobile station makes a communication with packets, and to provide a handover method that does not add a new data transfer sequence without increasing a packet transmission delay.

According to one aspect of the present invention, a base station is provided with a Last Packet determination timer in order to determine the reception of Last Packet. A handover-source base station or a handover-destination base station activates the timer upon receipt of a handover completion acknowledgment from an upper node station or according to a resource release instruction after the reception of the handover completion acknowledgement, and determines that the Last Packet has been received, upon expiration of the timer.

A value set in the timer may be obtained as the transmission delay time of Last Packet. The arrival time intervals of packets are measured, a value larger than their maximum value may be used as the timer value.

The handover-source base station generates a dummy Last Packet and transfers the generated packet to the handover-destination base station if a packet to be marked as Last Packet is not stored in a buffer unit. Upon receipt of the dummy Last Packet, the handover-destination base station determines that the packet transfer has been made.

According to another aspect of the present invention, the number of the last packet transmitted from an upper node station to a handover-source base station is included in a handover completion acknowledgment, and notified from the upper node station to a handover-destination base station.

According to one aspect of the present invention, by using the Last Packet determination timer, the handover-source base station or the handover-destination base station can securely determine that Last Packet has been received.

Accordingly, the handover-source base station can release resources after transmitting the Last Packet, whereas the handover-destination base station can execute the post-handover processes after receiving the Last Packet.

Additionally, the Last Packet determination timer is activated after the handover completion acknowledgement is received from the upper node station. Therefore, the timer value can be shortened, and the packet transmission delay can be reduced without estimating the value on the safe side.

Furthermore, according to another aspect of the present invention, the reception of Last Packet can be securely determined without adding a new data transfer sequence.

### Brief Description of Drawings

Fig. 1 is an example configuration of a mobile communication system;
Fig. 2 explains a packet transfer from a handover-source base station to a handover-destination base station at a handover;
Fig. 3 illustrates a handover sequence in LTE;
Fig. 4 explains a method for making reordering after all of packets that flow from an upper node station and packets that are transferred from the handover-source base station are received;
Fig. 5 explains a reordering method for transmitting transferred packets to a mobile station earlier;
Fig. 6 is an example device configuration of a base station;
Fig. 7 is an example flowchart of device operations of the handover-source base station;
Fig. 8 is an example flowchart of device operations of the handover-destination base station;
Fig. 9 explains a situation where the handover-destination base station transmits a resource release instruction without waiting for the reception of Last Packet, and the handover-source base station erroneously marks Last Packet;
Fig. 10 explains a situation where the handover-destination base station transmits the resource release instruction without waiting for the reception of Last Packet, and the handover-source base station cannot determine Last Packet;
Fig. 11 explains a handover sequence in a case where the handover-destination base station transmits the resource release instruction without waiting for the reception of Last Packet;
Fig. 12 explains the outline of a case where the handover-destination base station transmits the resource release instruction after waiting for the reception of Last Packet;
Fig. 13 explains a handover sequence in a case where the handover-destination base station transmits the resource release instruction after waiting for the reception of Last Packet;
Fig. 14 is an example device configuration of a base station in a first aspect of the present invention;
Fig. 15 explains a case where a packet waiting to be transferred is assumed to be Last Packet in a first embodiment;
Fig. 16 explains a case where a dummy Last Packet is generated and transferred in the first embodiment;
Fig. 17 illustrates the entire handover sequence in the first embodiment;
Fig. 18 is an example flowchart of device operations of the handover-source base station, which are specific to the first embodiment;
Fig. 19 is an example flowchart of device operations of the handover-destination base station, which are specific to the first embodiment;
Fig. 20 explains the outline of a second embodiment;
Fig. 21 illustrates the entire handover sequence in the second embodiment;
Fig. 22 is an example flowchart of device operations of the handover-source base station, which are specific to the second embodiment;
Fig. 23 is an example flowchart of device operations of the handover-destination base station, which are specific to the second embodiment;
Fig. 24 explains a case where a packet waiting to be transferred is assumed to be Last Packet in a third embodiment;
Fig. 25 explains a case where the dummy Last Packet is generated and transferred in the third embodiment;
Fig. 26 illustrates the entire handover sequence in the third embodiment;
Fig. 27 is an example flowchart of device operations of the handover-source base station, which are specific to the third embodiment;
Fig. 28 is an example flowchart of device operations of the handover-destination base station, which are specific to the third embodiment;
Fig. 29 illustrates a phase of a fourth embodiment, in which a handover completion acknowledgment including the number of Last Packet is notified from an upper node station to the handover-destination base station;
Fig. 30 illustrates a phase of the fourth embodiment, in which the handover-destination base station transmits a resource release message; and
Fig. 31 illustrates a phase of a fifth embodiment, in which the handover-destination base station transmits the resource release message.

### Best Mode of Carrying Out the Invention

A first aspect according to the present invention where a base station is provided with a timer function and a packet transfer end determination function, which are intended to determine the reception of Last Packet, is described with first to third embodiments.

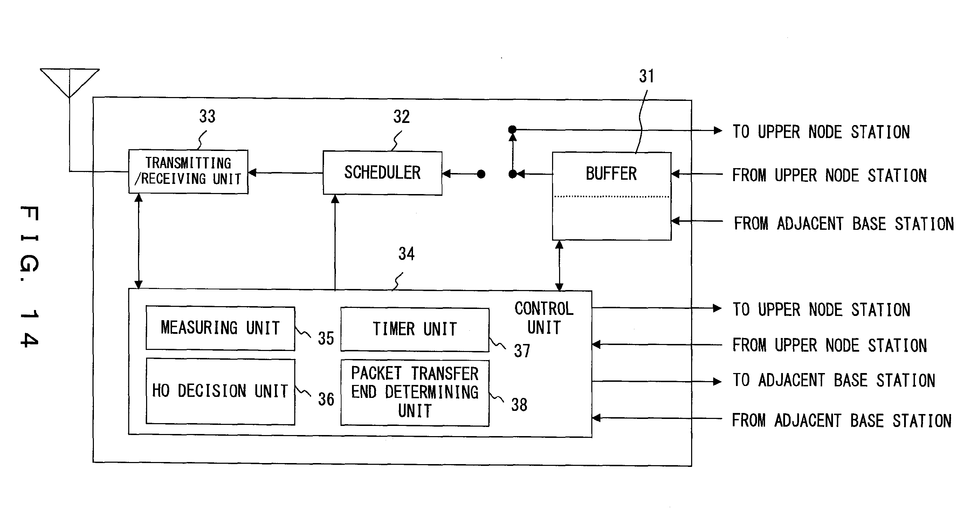

Fig. 14 is an example device configuration of a base station according to the first aspect of the present invention. This device configuration is common to the first to the third embodiments. Compared with the conventional base station illustrated in Fig. 6, a timer unit 37 for activating a Last packet determination timer (hereinafter referred to as a timer) is newly provided, and also a packet transfer end determining unit 38 is provided to determine Last Packet. Fundamental functions in blocks denoted with the same reference numerals are similar to those illustrated in Fig. 6. Note that a timer of an OS (Operating System) installed in a base station can be used as the timer.

### First Embodiment

In the first embodiment, a handover-source base station makes timer monitoring.

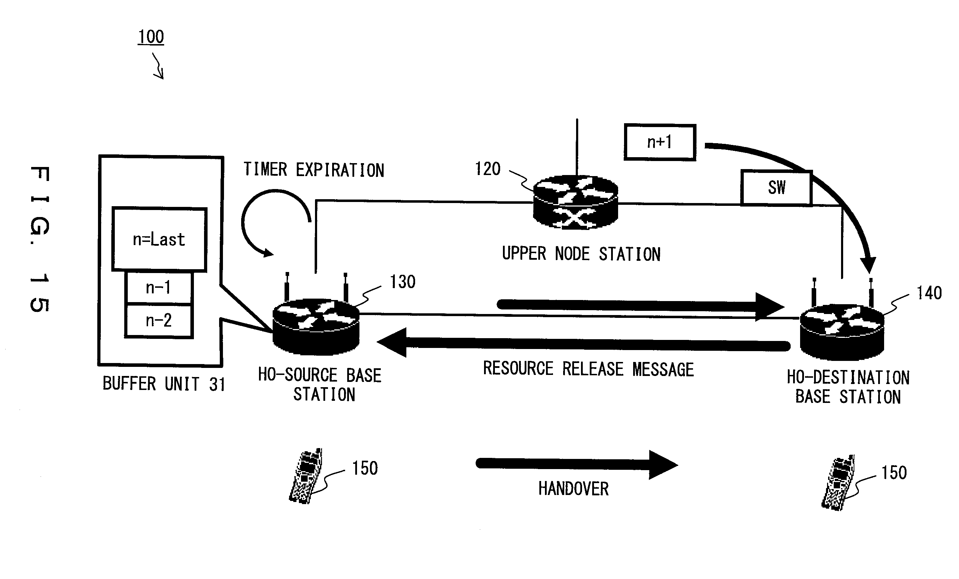

Fig. 15 explains the outline of the first embodiment, and illustrates the case where a packet waiting to be transferred is assumed to be Last Packet. A configuration example of a mobile communication system 100 according to the present invention is similar to that of the mobile communication system 10 illustrated in Fig. 1, and implemented by including an upper node station 120, a handover-source base station 130, a handover-destination base station 140, and a mobile station 150 as illustrated in Fig. 15.

In the example illustrated in Fig. 15, the mobile station 50 is making a handover for moving from the area of the handover-source base station 30 to that of the handover-destination base station 40 in a similar manner as in the above described example, and the upper node station 20 switches the transmission route of packets addressed to the mobile station 50 after transmitting up to packets n to the handover-source base station 30, and transmits a packet n+1 and subsequent ones to the handover-destination base station 40. The packet n is assumed to be Last Packet also in the following examples.

The case where the timing of transmitting the resource release instruction 12 in the above described handover sequence in LTE is set to that immediately after the handover-destination base station 140 receives an HO completion acknowledgment message 11 is considered. At this timing, however, there is a possibility that the packet n, which is to be Last Packet, has not been received yet when the handover-source base station 130 receives the resource release instruction.

Accordingly, the handover-source base station 130 activates the timer upon receipt of the resource release instruction, determines that Last Packet is not received until the timer expires, and does not release resources. If packets waiting to be transferred remain in the buffer unit 31 upon expiration of the timer as illustrated in Fig. 15, the last packet n among them is marked as Last Packet.

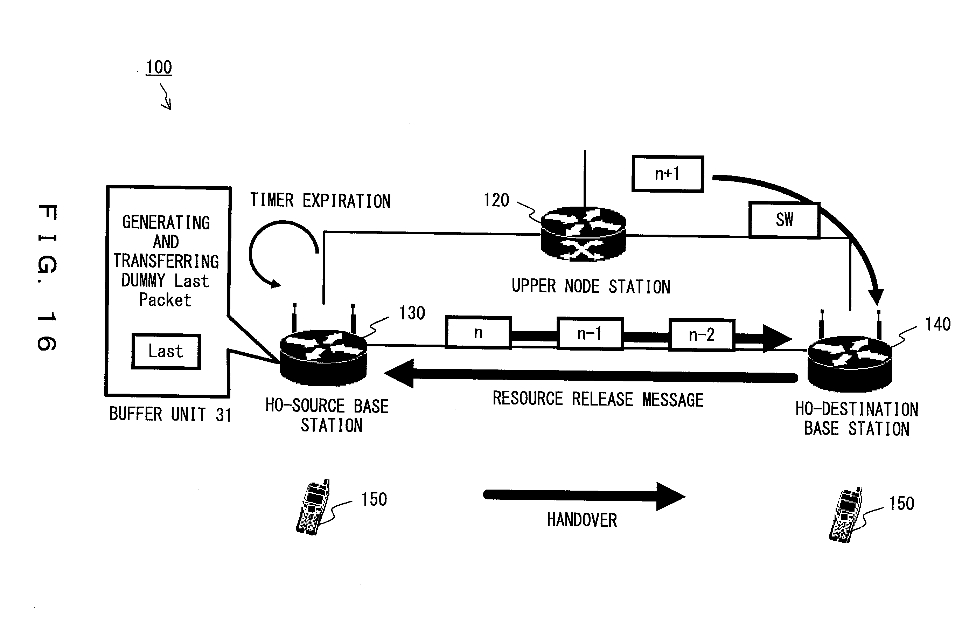

Fig. 16 illustrates the case where the packets n-2 to n are being transferred from the handover-source base station 30 to the handover-destination base station 40, and no packets remain in the buffer unit 31 at the expiration of the timer.

In this case, a dummy Last Packet is generated and transferred as illustrated in Fig. 16. The handover-source base station 130 releases resources after transferring the Last Packet or the dummy Last Packet. Upon receipt of the Last Packet or the dummy Last Packet, the handover-destination base station 140 executes post-handover processes.

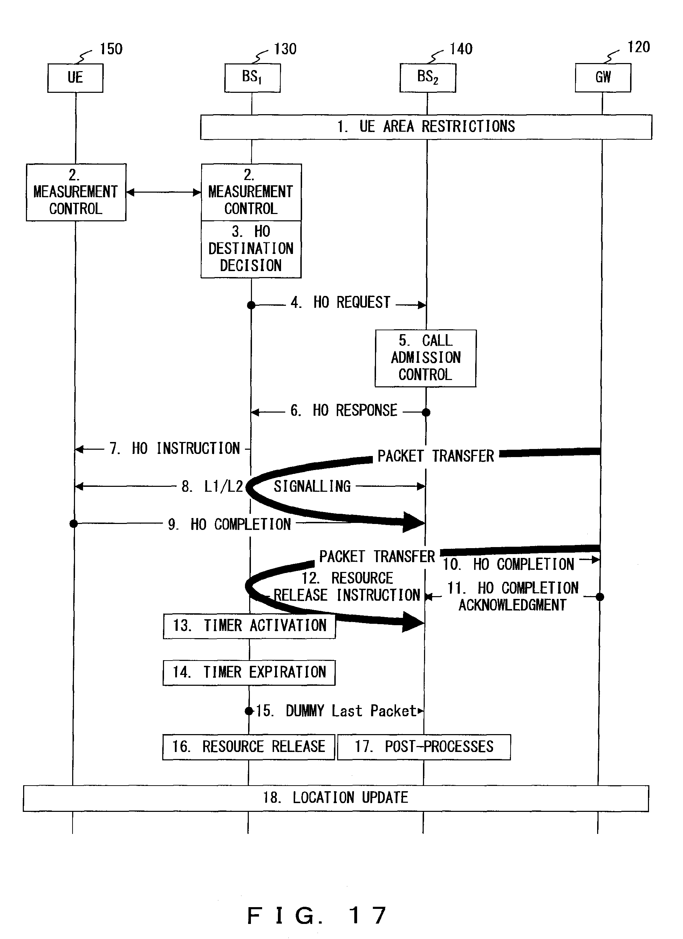

Fig. 17 illustrates the entire sequence in the first embodiment.

Compared with the handover sequence in the current LTE illustrated in Fig. 3, the resource release instruction 12 is issued by the handover-destination base station 140 immediately after the handover completion acknowledgment 11 is received, the handover-source base station 130 activates the timer 13 upon receipt of the resource release instruction, transfers Last Packet or the dummy Last Packet 15 to the handover-destination base station 140 according to time expiration 15, and releases resources 16. Moreover, the handover-destination base station 140 executes the post-handover processes after receiving Last Packet or the dummy Last Packet 15 as stated earlier.

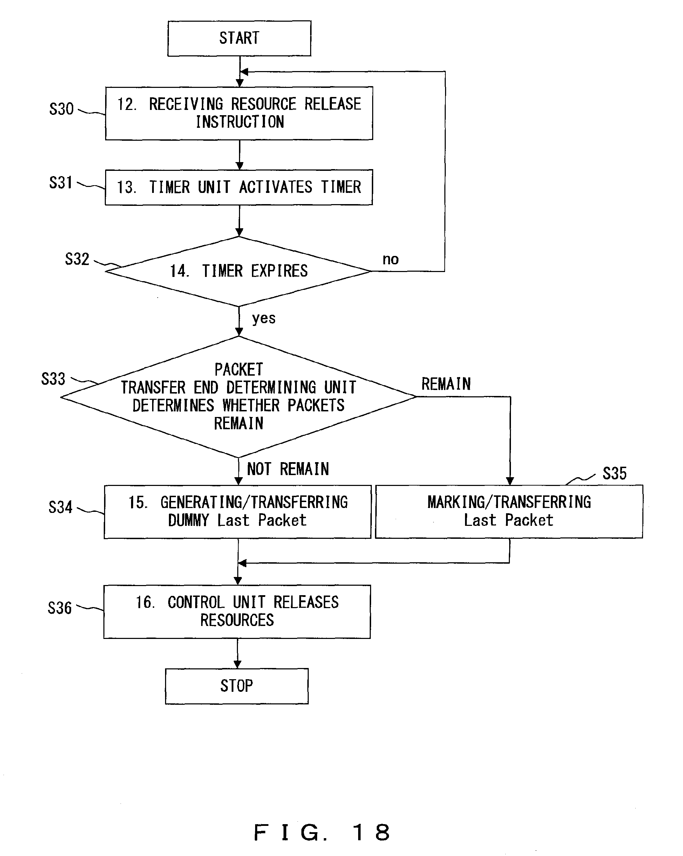

Fig. 18 is an example flowchart of device operations of the handover-source base station 130, which are specific to the first embodiment. Numbers within the flowchart correspond to those in the sequence illustrated in Fig. 17.

Upon receipt of the resource release instruction in step S30, the process goes to step S31, in which the timer unit 37 activates the timer.

In step S32, whether or not the timer expires is determined. If the timer is determined to expire, the process goes to step S33.

In step S33, the packet transfer end determining unit 38 determines whether or not packets remain. If no packets remain, the dummy Last Packet is generated and transferred in step S34. Then, the process goes to step S36. If one or more packets remain, the last packet among them is marked as Last Packet and transferred in step S35. Then, the process goes to step S36.

In step S36, the control unit 34 releases resources. Here, the process is terminated.

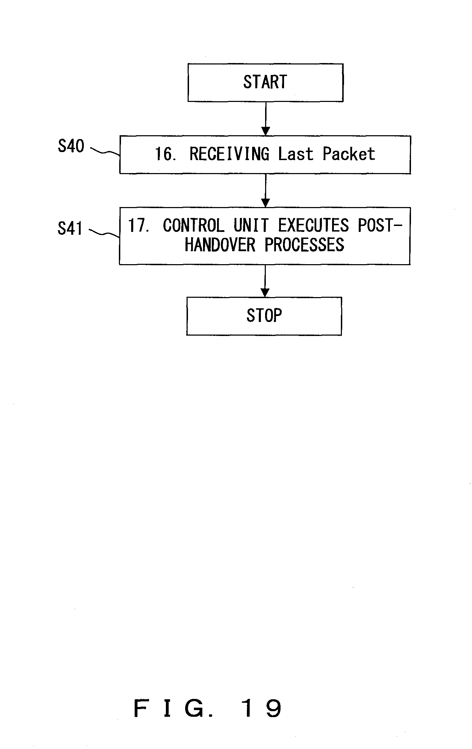

Fig. 19 is a flowchart of device operations of the handover-destination base station 140, which are specific to the first embodiment. In a similar manner as in the case illustrated in Fig. 18, numbers within the flowchart correspond to those in the sequence illustrated in Fig. 17.

Upon receipt of the Last Packet or the dummy Last Packet in step S40, the control unit 34 executes the post-handover processes in step S41. Here, the process is terminated.

The length of time for setting the timer is described next.

Assume that a set value of the timer is Tt. If Tt is small, Last Packet is sometimes determined to be received although a packet to be marked as Last Packet is not actually received as described with reference to Fig. 9. On the other hand, if Tt is long, a packet transfer delay is increased. Accordingly, it is desirable to set Tt to a suitable value.

Therefore, the value of Tt is set to, for example, a packet transfer delay time (1.5 + Ts1u) [ms] taken from the handover-source base station 130 to the upper node station 120. 1.5 ms is the total time of the packet processing delay of the handover-source base station 130 and the upper node station 120. Ts1u is a packet propagation delay time taken from the handover-source base station 130 to the upper node station 120, and its value ranges from 1 to 15 ms.

Accordingly, the total time taken from when the upper node station 120 switches the transfer destination of packets addressed to the mobile station 150 from the handover-source base station 130 to the handover-destination base station 140 and then the handover-source base station 130 receives the resource release instruction and activates the timer, until the handover-source base station 130 determines Last Packet upon expiration of the timer can be calculated with (time for transmitting the HO completion acknowledgment 11 + time for transmitting the resource release instruction 12 + time until the timer expires). That is, if the time for transmitting the HO completion acknowledgment 11 indicates Ts1c, and the time for transmitting the resource release instruction 12 indicates Tx2c, "Ts1c + Tx2c + Tt" [ms] is obtained.

A modification example of the first embodiment is described next.

In the above described first embodiment, the value Tt of the timer is set to (1.5+Ts1u) [ms]. In this modification example, however, a timer activation method is different from that in the first embodiment, and also the value of the timer is set based on another idea.

Specifically, for example, the timer is repeatedly activated each time a packet arrives at the handover-source base station 130, and Last Packet is determined to have been already received if a packet addressed to a mobile station, which is to make a handover, does not flow for the time of an X (X is a real number larger than 1) multiple of the maximum value of arrival interval times since the resource release instruction is received. Namely, Last Packet is determined by using the record of the arrival interval times of packets, and by setting the X multiple of the maximum value of the arrival interval times as the value of the timer. Note that a value larger than the maximum value of the arrival interval times of packets can be set as the value of the timer by providing X as a parameter.

Upon expiration of the timer, the dummy Last Packet is generated and transmitted, or the last packet among packets waiting to be transferred is recognized as Last Packet.

A specific set value of the timer depends on an implementation. By way of example, for a non-real time communication such as a file transfer, etc. , the end-to-end data transfer protocol is TCP. Therefore, methods such as a method for setting the value of the timer to the X multiple of an expected average round trip propagation delay time of TCP packets can be cited.

For a real time communication such as a voice communication, etc., the transmission interval of voice packets is constant. Therefore, methods such as a method for predicting the arrival interval of voice packets arriving at the handover-source base station and for setting the value of the timer to the X multiple of the predicted interval can be cited.

Schematics of the outline, the sequence, and an example flowchart of device operations of the modification example are similar to those illustrated in Figs. 15 to 19.

### Second Embodiment

In the second embodiment, the handover-destination base station 140 makes timer monitoring.

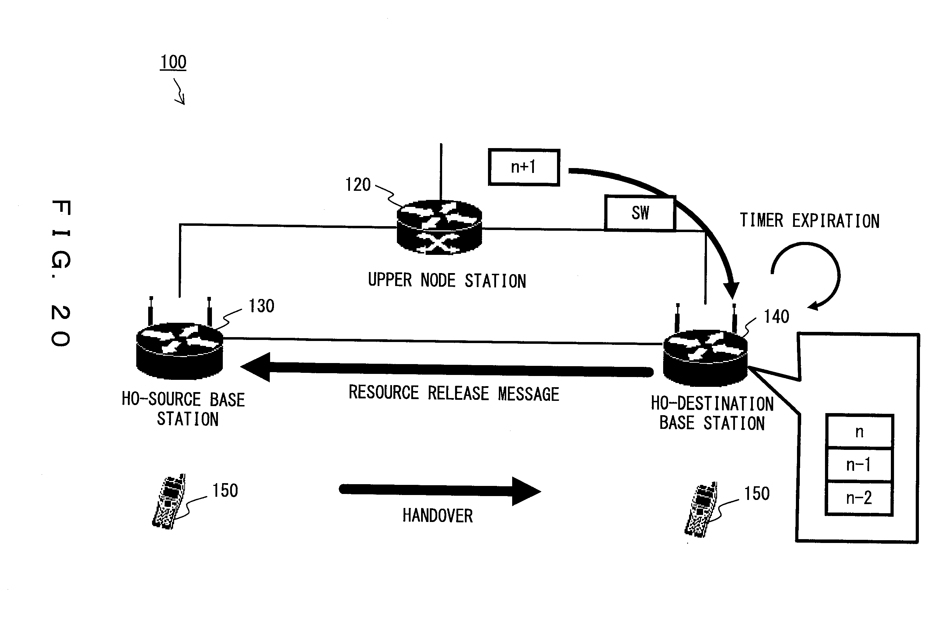

Fig. 20 explains the outline of the second embodiment.

The case where the timing of transmitting the resource release instruction 12 in the above described handover sequence in LTE is set to that immediately after the handover-destination base station 140 receives Last Packet is considered. However, the conventional systems do not provide a method by which the handover-destination base station 140 determines Last Packet. This causes a problem that there is no method by which the handover-destination base station 140 transmits the resource release instruction after receiving Last Packet and executes the post-processes. Accordingly, the handover-destination base station 140 activates the timer upon receipt of the handover completion acknowledgment 11 with the packet SW illustrated in Fig. 20, determines that "the Last Packet has already been received" upon expiration of the timer, and transmits the resource release message. In the example illustrated in Fig. 20, the packets n-2 to n have been already transferred to the handover-destination base station 140 at the expiration of the timer. Thereafter, the handover-destination base station 140 executes the post-handover processes.

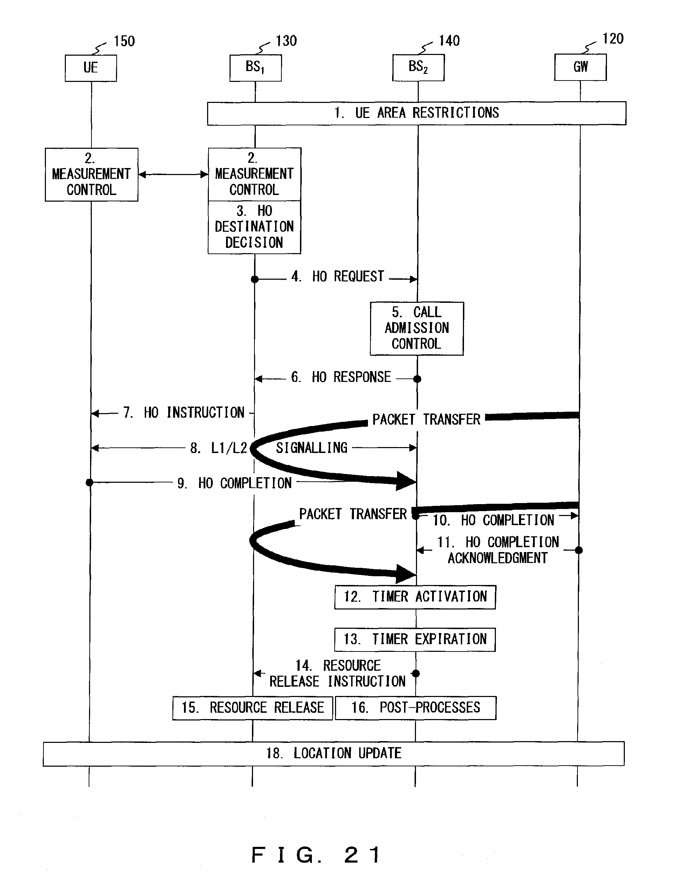

Fig. 21 illustrates the entire handover sequence in the second embodiment.

Compared with the handover sequence in the current LTE, which is illustrated in Fig. 3, the sequence illustrated in Fig. 21 is identical until the handover-destination base station 140 receives the handover completion acknowledgment 11.

In the second embodiment, the handover-destination base station 140 activates the timer 12 upon receipt of the handover completion acknowledgment11, issues the resource release instruction 14 to the handover-source base station 130 upon expiration of the timer 13, and executes the post-handover processes 16.

The handover-source base station 130 performs resource release 15 upon receipt of the resource release instruction 14.

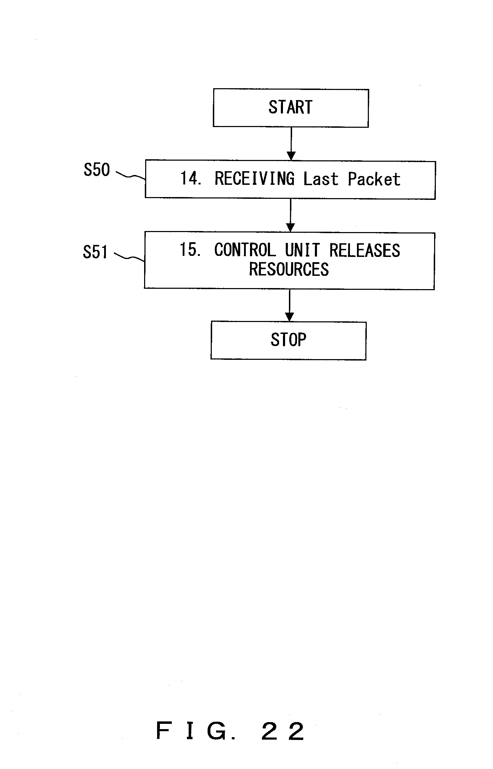

Fig. 22 is a flowchart of device operations of the handover source base station 130, which are specific to the second embodiment. Numbers within the flowchart correspond to those in the sequence illustrated in Fig. 21.

The handover-source base station 130 determines that the handover-destination base station 140 has received Last Packet by receiving the resource release instruction in step S50. Then, the control unit 34 releases resources in step S51. Here, the process is terminated.

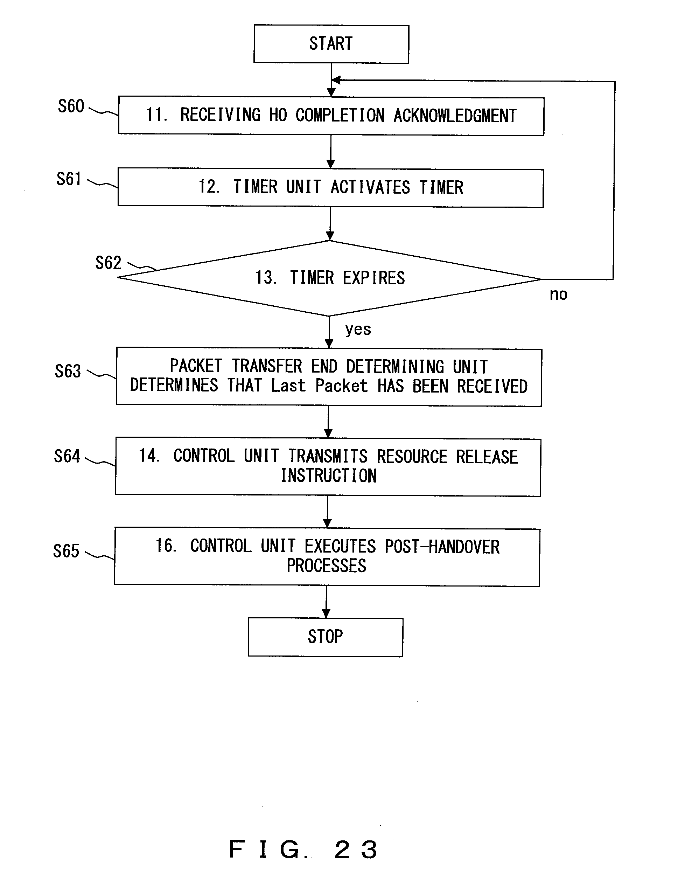

Fig. 23 is a flowchart of device operations of the handover-destination base station 140, which are specific to the second embodiment. Numbers within the flowchart correspond to those in the sequence illustrated in Fig. 21.

Upon receipt of the handover completion acknowledgment in step S60, the process goes to step S61, in which the timer unit 37 activates the timer.

Next, in step S62, whether or not the timer expires is determined. If the timer is determined to expire, the packet transfer end determining unit 38 determines in step S63 that Last Packet has been received.

Then, the control unit 34 transmits the resource release instruction in step S64, and executes the post-handover processes in step S65. Here, the process is terminated.

The length of time for setting the timer in the second embodiment is described next. Unlike the first embodiment, a queuing delay of transferred packets, and the like must be considered for the value of the timer when the handover-destination base station 140 detects the reception of Last Packet. Hence, the value of the timer cannot be easily calculated as in the first embodiment. Therefore, it is difficult to calculate the time required until the reception of Last Packet is determined.

Accordingly, for example, the following method is available. Namely, the handover-destination base station 140 measures the arrival interval times of transferred packets with the timer unit 37, determines that Last Packet has been received if no more packets are transferred for an X (X is a real number larger than 1) multiple of the maximum value of the arrival interval times, and executes the post-processes. That is, a value larger than the maximum value of the arrival interval times of packets transferred from the handover-destination base station 140 is set as the value of the timer.

As described above, in the second embodiment, the reception of Last Packet is determined with timer monitoring. Accordingly, there is no need to mark Last Packet or to generate and transfer the dummy Last Packet.

### Third Embodiment

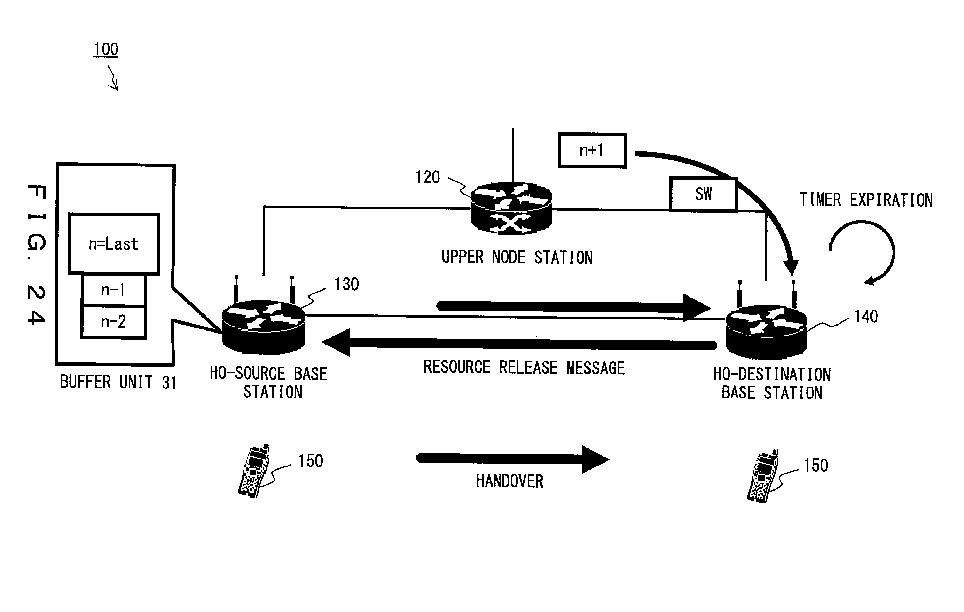

The third embodiment is described next with reference to Figs. 24 to 28.

In the third embodiment, the handover-destination base station 140 activates the timer to make timer monitoring in a similar manner as in the second embodiment. However, a difference from the second embodiment is that the time at which the timer expires in the handover-destination base station 140 is the time when it is determined that "the handover-source base station has received Last Packet".

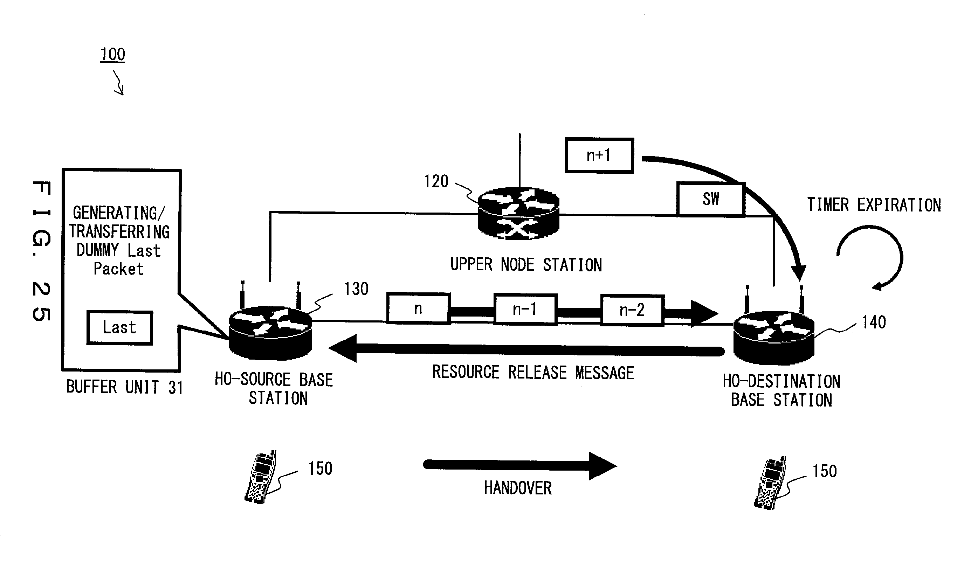

Figs. 24 and 25 explain the outline of the third embodiment. Fig. 24 illustrates the case where a packet waiting to be transferred is assumed to be Last Packet, whereas Fig. 25 illustrates the case where no packets waiting to be transferred remain.

Upon receipt of the handover completion acknowledgment with the packet SW from the upper node station 120, the handover-destination base station 140 predicts the time at which all of packets transferred from the handover-source base station 130 are received, and activates the timer. Upon expiration of the timer, the handover-destination base station 140 determines that "the handover-source base station has received Last Packet", and transmits the resource release message.

If the packets n-2 to n waiting to be transferred remain in the buffer unit 31 as illustrated in Fig. 24, the handover-source base station 130 that receives the resource release message marks the last packet n among them as Last Packet.

On the other hand, if no packets remain in the buffer unit 31 as illustrated in Fig. 25, the handover-source base station 130 generates and transfers the dummy Last Packet.

Lastly, the handover-destination base station 140 executes the post-handover processes upon receipt of the Last Packet or the dummy Last Packet.

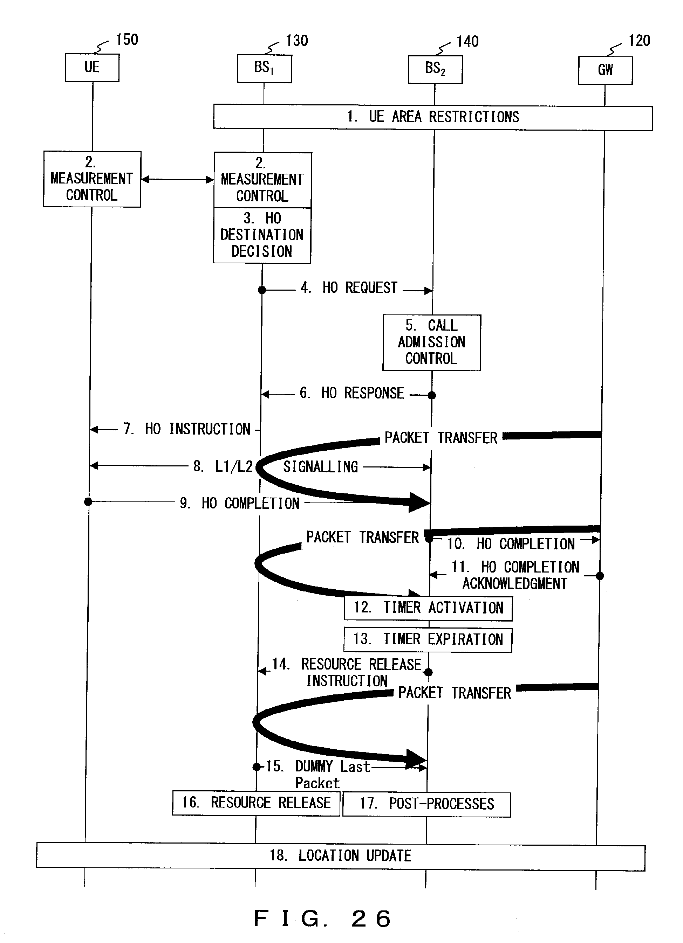

Fig. 26 illustrates the entire handover sequence in the third embodiment. Although the operations of this sequence are identical to those in the second embodiment illustrated in Fig. 21, a set time of the timer from the timer activation 12 until the timer expiration 13 is different as described above.

The setting of the value of the timer in the third embodiment is described next.

The setting of the value of the timer in the third embodiment can be made in a similar manner as in the first embodiment. Assume that the value of the timer is Tt, and the value of the timer Tt is set to the packet transmission delay time (1.5+T1u) [ms] taken from the handover-source base station to the upper node station. 1.5 ms is the total time of the packet processing delay times of the base station and the upper node station, Ts1u is a packet propagation delay time taken from the handover-source base station to the upper node station, and its value ranges from 1 to 15 ms. Accordingly, the total time required from when the upper node station switches the transfer destination from the handover-source base station to the handover-destination base station and then the handover-destination base station transmits the resource release instruction, until when the handover-source base station receives the resource release instruction and determines the reception of Last Packet can be calculated with (time for transmitting the HO completion acknowledgment 11 + time until the timer expires + time for transmitting the resource release instruction 14) . As a result, "Ts1c + Tt + Tx2c" [ms] is obtained. This is the same value as that in the first embodiment.

Namely, the packet transmission delay, which occurs with the determination of Last Packet, is the same in the first and the third embodiments except that the timer monitoring for determining Last Packet is made either in the handover-source base station 13 or in the handover-destination base station 140.

Accordingly, the present invention can be carried out not by fixedly adopting the first or the third embodiment in units of upper node stations 120, but by adopting either of the first and the third embodiments, for example, according to a combination of the handover-source base station 130 and the handover-destination base station 140, or according to fluctuations in a traffic load.

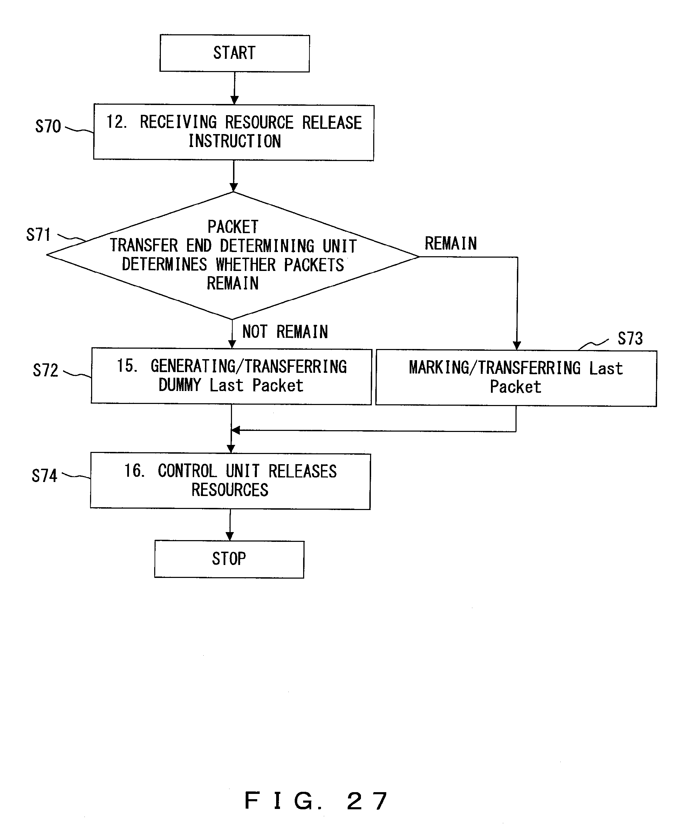

Fig. 27 is a flowchart of device operations of the handover-source base station 130, which are specific to the third embodiment. Numbers within the flowchart correspond to those in the sequence illustrated in Fig. 26.

Upon receipt of the resource release instruction from the handover-destination base station 140 in step S70, the process goes to step S71, in which the packet transfer end determining unit 38 determines whether or not packets remain. If no packets remain, the dummy Last Packet is generated and transferred in step S72. Then, the process goes to step S74. If one or more packets remain, the last packet among them is marked as Last Packet and transferred in step S73. Then, the process goes to step S74.

In step S74, the control unit 34 releases resources. Here, the process is terminated.

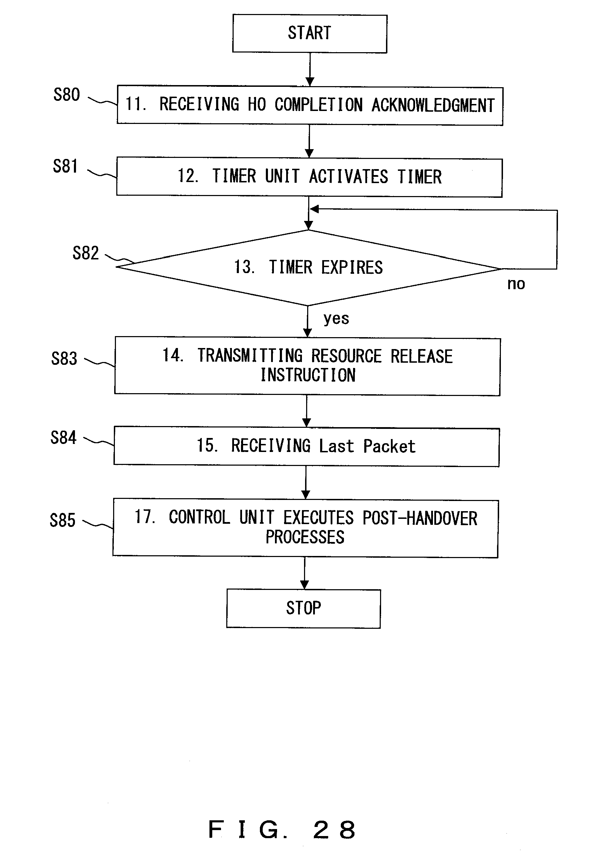

Fig. 28 is a flowchart of device operations of the handover-destination base station 140, which are specific to the third embodiment. Numbers within the flowchart correspond to those in the sequence illustrated in Fig. 26.

Upon receipt of the handover completion acknowledgment in step S80, the process goes to step S81, in which the timer unit 37 activates the timer.

In step S82, whether or not the timer expires is determined. If the timer is determined to expire, the process goes to step S83.

In step S83, the resource release instruction is transmitted to the handover-source base station 130. Then, the process goes to step S84.

Upon receipt of the Last Packet or the dummy Last Packet in step S84, the control unit 34 executes the post-handover processes in step S85. Here, the process is terminated.

A second aspect of the present invention, according to which the upper node station notifies the handover-destination base station of the number of the last packet, which is transmitted from the upper node station to the handover-source base station and addressed to the mobile station making the handover, by including the number in the handover completion acknowledgment is described next with fourth and fifth embodiments.

### Fourth Embodiment

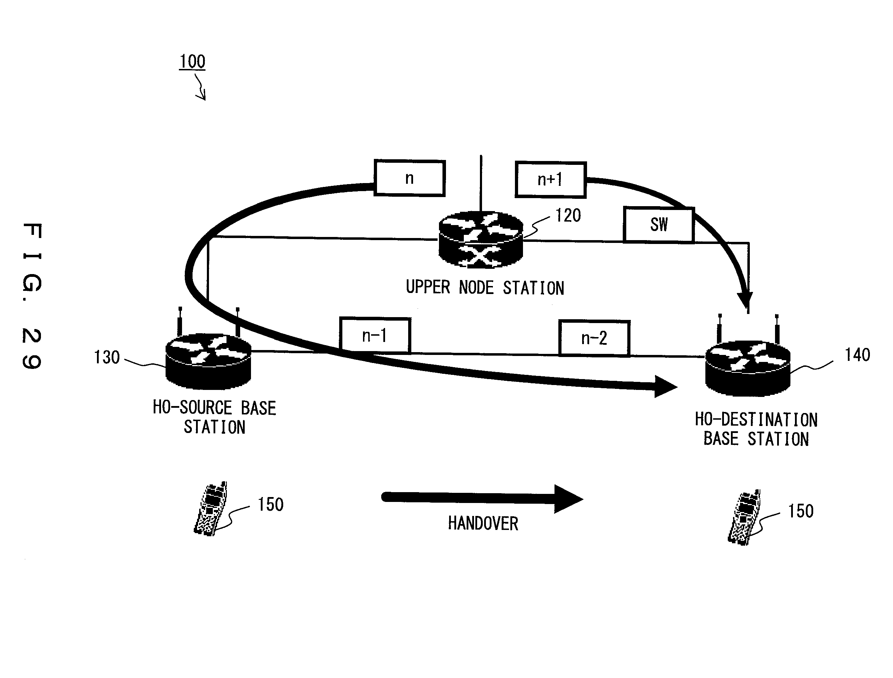

Fig. 29 illustrates a phase of the fourth embodiment, in which the handover completion acknowledgment including the number of Last Packet is notified from the upper node station 120 to the handover-destination base station 140.

In the example illustrated in Fig. 29, the mobile station 150 is making a handover for moving from the area of the handover-source base station 130 to that of the handover-destination base station 140, the packets n-2 to n-1 are being transferred from the handover-source base station 130 to the handover-destination base station 140, and the packet n is being transferred from the upper node station 120 to the handover-source base station 130.

From the upper node station 120 to the handover-destination base station 140, the packet n+1 addressed to the mobile station 150 is being transferred subsequently to the packet SW of the control plane, which indicates the handover completion acknowledgment.

In the fourth embodiment, the upper node station 120 notifies the handover-destination base station 140 that the route is switched at the packet number n with the handover completion acknowledgment 11 in the handover sequence illustrated in Fig. 3. As a result, the handover-destination base station 140 learns that the packet number of Last Packet is n.

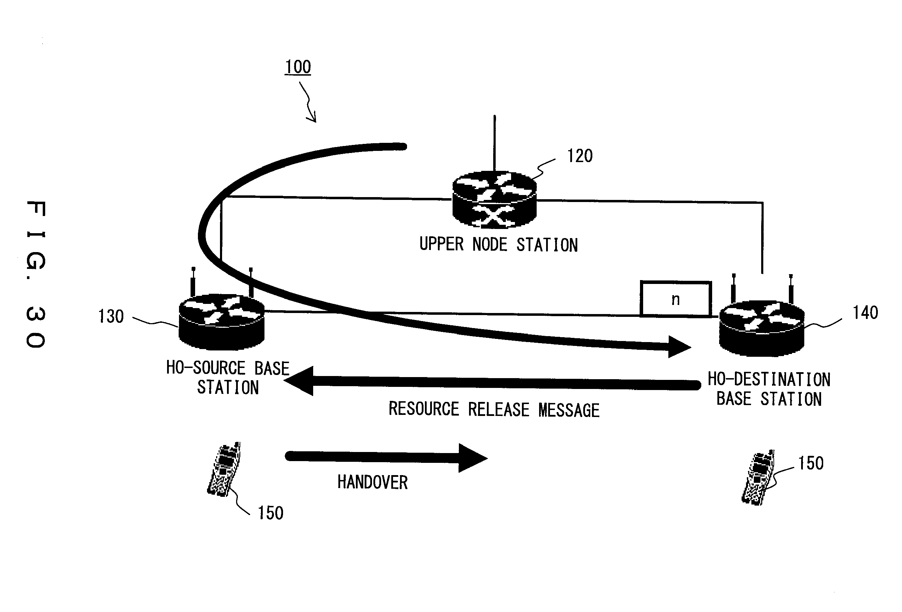

Fig. 30 illustrates a phase of the fourth embodiment, in which the handover-destination base station 140 transmits the resource release message.

The handover-destination base station 140 determines the reception of Last Packet by identifying the packet number n of the packet transferred from the handover-source base station 130.

The handover-destination base station 140 executes the post-handover processes on the basis of the determination of the reception of Last Packet, and transmits the resource release message 12 to the handover-source base station 130.

Upon receipt of the resource release message, the handover-source base station 130 releases resources.

According to the fourth embodiment, Last Packet can be securely detected without changing the handover sequence illustrated in Fig. 3 and the conventional device configuration of the base station illustrated in Fig. 6.

### Fifth Embodiment

The fourth and the fifth embodiments are identical up to the phase in which the handover completion acknowledgment including the packet number of Last Packet is notified from the upper node station 120 to the handover-destination base station 140. In the fifth embodiment, the handover-destination base station 140 notifies the handover-source base station 130 of the packet number of Last Packet with the resource release message if the handover-destination base station 140 learns that the packet number of Last packet is n.

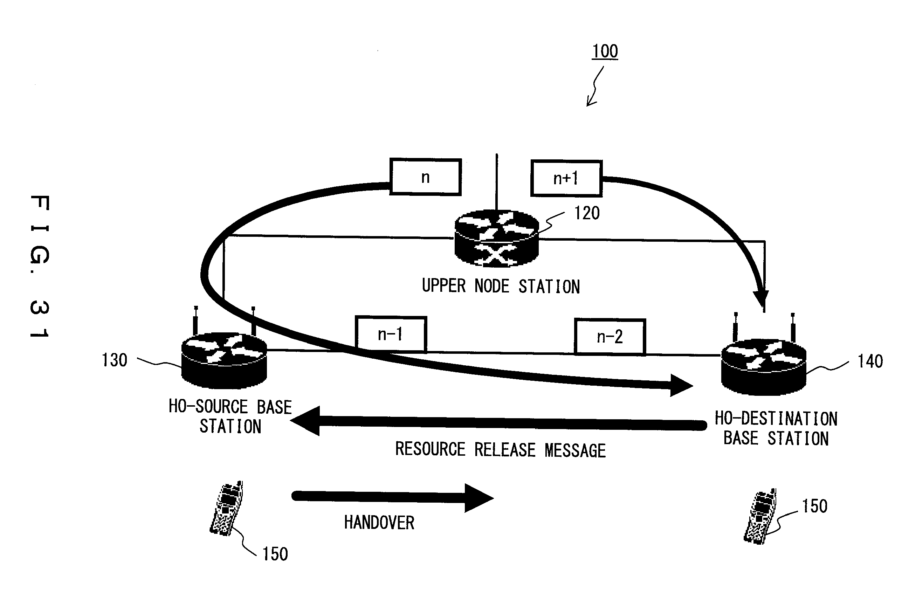

Fig. 31 illustrates a phase of the fifth embodiment, in which the handover-destination base station 140 transmits the resource release message.

The handover-destination base station 140 transmits the resource release message 12 upon receipt of the handover completion acknowledgment 11 in the handover sequence illustrated in Fig. 3. At this time, it notifies the handover-source base destination 130 of information indicating that Last packet is n by transmitting the information over the resource release message. Upon receipt of the resource release instruction 12, the handover-source base station 130 releases resources after transferring the packet n if the packet n remains in the buffer unit. In contrast, if no packet remains in the buffer unit, the handover-source base station 130 immediately releases resources.

As descried above, the handover-destination base station 140 can detect the termination of a packet transfer by receiving the packet n, and can execute the post-processes. In the meantime, the handover-source base station 130 can release resources upon termination of the transfer of the packet n.

## Claims

1. A handover method for use in a mobile communication system where a mobile station makes a communication with packets, comprising:
receiving from an upper node station a handover completion acknowledgment indicating that a transmission destination of a packet addressed to a mobile station making a handover is switched from a handover-source base station to a handover-destination base station;
activating a timer in the handover-source base station or the handover-destination base station; and
determining that a packet, which is addressed to the mobile station and transmitted last to the handover-source base station, has been received, upon expiration of the timer.

2. The handover method according to claim 1, wherein
the handover-destination base station issues a resource release instruction to the handover-source base station upon receipt of the handover completion acknowledgment from the upper node station;
the handover-source base station that receives the resource release instruction activates the timer; and
upon expiration of the timer, if one or more packets addressed to the mobile station making the handover remain in the handover-source base station, the handover-source base station marks the last packet among the packets as a last packet and transfers the marked packet to the handover-destination base station, and if a packet addressed to the mobile station does not remain in the handover-source base station, the handover-source base station generates a dummy packet marked as a last packet and transfers the dummy packet to the handover-destination base station.

3. The handover method according to claim 2, wherein
a timer value of the timer is set to a packet transmission delay time between the upper node station and the handover-source base station.

4. The handover method according to claim 2, wherein
the handover-source base station measures arrival intervals of packets from the upper node station; and
a timer value of the timer is set to a value larger than a maximum value of the measured arrival intervals of packets.

5. The handover method according to claim 1, wherein
the handover-destination base station activates the timer upon receipt of the handover completion acknowledgment from the upper node station, and issues the resource release instruction to the handover-source base station upon expiration of the timer.

6. The handover method according to claim 5, wherein
the handover-destination base station measures arrival intervals of packets transferred from the handover-source base station;
a timer value of the timer is set to a value larger than a maximum value of the measured arrival intervals of packets; and
the handover destination base station executes post-handover processes immediately after the timer is expired and the resource release instruction is transmitted to the handover-source base station.

7. The handover method according to claim 5, wherein
a timer value of the timer is a packet transmission delay time between the upper node station and the handover source base station; and
the handover-source base station that receives the resource release instruction marks, if one or more packets addressed to the mobile station making the handover remain in the handover-source base station, the last packet among the packets as a last packet and transfers the marked packet to the handover-destination base station, and generates, if a packet addressed to the mobile station does not remain in the handover-source base station, a dummy packet marked as a last packet and transfers the dummy packet to the handover-destination base station.

8. A base station, which controls a handover of a mobile station, in a mobile communication system where the mobile station makes a communication with packets, comprising:
a timer unit for activating a timer, and
a packet transfer end determining unit, wherein
the timer unit activates the timer after a handover completion acknowledgment is received from an upper node station, and
upon expiration of the timer, the packet transfer end determining unit determines whether or not a last packet, which is transferred from a handover-source base station and addressed to the mobile station making the handover, has been transferred or received.

9. The base station according to claim 8 being the handover-source base station, wherein
the packet transfer end determining unit determines whether or not the last transferred packet has been transferred by determining whether or not a packet addressed to the mobile station making the handover remains in the handover-source base station, and
if one or more packets addressed to the mobile station making the handover remain, the last packet among the packets is marked as a last packet and transferred to the handover-destination base station, and if a packet addressed to the mobile station does not remain, a dummy packet marked as a last packet is generated and transferred to the handover-destination base station.

10. The base station according to claim 9, wherein
a timer value of the timer is set to a packet transmission delay time between the upper node station and the handover-source base station.

11. The base station according to claim 9, wherein
the handover-source base station measures arrival intervals of packets from the upper node station, and
a timer value of the timer is set to a value larger than a maximum value of the measured arrival intervals of packets.

12. The base station according to claim 8 being a handover-destination base station, wherein:
the timer unit activates the timer upon receipt of the handover completion acknowledgment from the upper node station, and
upon expiration of the timer, the packet transfer end determining unit determines that a last packet, which is transferred from the handover-source base station and addressed to the mobile station making the handover, has been received.

13. A handover method for use in a mobile communication system where a mobile station makes a communication with packets, wherein
an upper node station notifies a handover-destination base station of a number of a last packet, which is transmitted from the upper node station to a handover-source base station and addressed to a mobile station making a handover, by including the number in a handover completion acknowledgment.

14. The handover method according to claim 13, wherein
the handover-destination base station issues a resource release instruction to the handover-source base station upon receipt of the packet having the number, which is transferred from the handover-source base station.

15. The handover method according to claim 13, wherein
the handover-destination base station transmits a resource release instruction including a notification of the number to the handover-source base station if the number is notified.
